# EUROPEAN PATENT APPLICATION

(11) **EP 1 667 445 A1**
(43) Date of publication of application: **07.06.2006**
(21) Application number: 05077729.1
(22) Date of filing: 02.10.1996
(51) Int. Cl.: H04N 5/445, H04N 5/782

(54) **Systems and methods for providing television schedule information**

(30) Priority: 02.10.1995 US 537650; 03.05.1996 US 642259; 26.07.1996 US 22826 P
(62) Divisional of application: 05075464.7
(71) Applicant: STARSIGHT TELECAST, INC., Los Angeles, California 90028 (US)
(72) Inventor: Schein, Steven M., Menio Park, CA 94536 (US); O'Brien, Sean A., CA 94566 (US); Klosterman, Brian L., San Ramon CA 94583 (US); Milnes, Kenneth A., Fremont, CA 94536 (US)
(74) Representative: Hale, Peter

(57) **Abstract**

The present invention provides systems and methods for providing television schedule information to a viewer, and for allowing the viewer to link, search, select and interact with information in a remote database, e.g., a database on the intemet. The television schedule information can be displayed on a variety of viewer interfaces, such as television screens (32), computer monitors (10), PCTV screens (362) and the like. The television schedule information may be stored on the viewer's computer (10), television (32), PCTV (362), or a remote server (350), or the television schedule information may be downloaded from a remote database to the viewer's computer (10), television (32) or PCTV (362).

## Description

### BACKGROUND OF THE INVENTION

The present invention generally relates to systems and methods for providing information to television viewers, and more particularly to systems and methods for allowing the viewer to retrieve, search, select and interact with television schedule information located in a remote database, computer network or on-line service, e.g., a network server on the Internet or World Wide Web.

As the number of television stations in a metropolitan area or on a cable network has increased, the number of programs of potential interest that are presented to a viewer has risen dramatically. With the use of dish antennas capable of receiving direct satellite signals, the multitude of programs available to the viewer has further increased. Consequently, television schedule systems that are provided directly on the viewer's television screen have been developed to assist the viewer in sorting through these various programs and determining which programs to watch or record. One such television schedule system is disclosed in commonly assigned U.S. Patent No. 5,353,121 (Young et al.), the complete disclosure of which is hereby incorporated by reference. In one embodiment of Young, the television schedule includes a series of menu screens having an array of cells corresponding to different television programs. The viewer may scroll through the cells to view which television programs are being presented on various channels at various times. In addition, the viewer may select certain cells to obtain more information on the associated program or to pull up other submenus with additional options.

The recent development of television schedule systems, such as the above described patent to Young, have created many new challenges and opportunities. One such challenge and opportunity is to provide viewers with additional information associated with a particular program in the television guide. As a television viewer is browsing through the television programs, he or she may wish to obtain more information relating to specific areas of interest or concerns associated with the show, such as the actors, actresses, other movies released during the same time period, or travel packages or promotions that may be available through primary, secondary or third party vendors. Offering this type of information to the television viewer can be difficult, however, because their are hundreds of different programs broadcast every day.In addition, the available information changes at a rapid pace, which makes it even more difficult to provide this information in present television schedule guides.

In television broadcasting, it may also be desirable to interact with the viewer. There are many commercials and programs which request viewer action such as purchasing an advertised product, making a monetary contribution, responding to a survey, answering a question, or participating in contests with other viewers, for example. One problem with this existing system is that it is often difficult to motivate a viewer to request information or send in a contribution after the broadcast of the commercial or program. Viewers will often forget the advertisement or simply lose motivation to spend money or request information after the commercial or program is over.Another problem is that companies sponsoring these commercials or programs would often like to provide their viewers with further information, if the viewers could be identified or if the viewer requests the additional information. Thus, it would be desirable to provide a ready and efficient method to facilitate an exchange of information between television viewers and producers, promoters and advertisers during the broadcast of the commercial or program.

The present invention is set out in the independent claims. Some optional features are set out in the claims dependent thereto.

### SUMMARY OF THE INVENTION

The present invention provides systems and methods for providing television schedule information on a visual interface, and for allowing the viewer to retrieve, search, select and interact with information located in a remote database, computer network or on-line service, such as a network server on the Internet or World Wide Web. The television schedule information can be displayed on a variety of visual interfaces, such as televisions screens, computer monitors, PCTV screens and the like. The television schedule information may be stored on the viewer's computer, television, PCTV, or a remote server (e.g., a website), or the television schedule information may be downloaded from a remote database or computer network to the viewer's computer, television or PCTV. The present invention also provides systems and methods for allowing the viewer to navigate and interact with a program guide that is displayed, for example, on the viewer's television screen. The program guide will usually include a schedule information area that depicts the programs that are being presented on each channel at each time during the day, week or month. With an input device, such as a remote control device, pointing device, mouse, keyboard, microphone or the like, the viewer can browse through the schedule information area and/or obtain more information about programs of particular interest.

In one embodiment, the present invention includes an interactive computer system which provides television schedule information. All or portions of this television schedule information may be provided to a television system, a computer tnonitor, a PCTV or the like. The interactive computer system can use the television schedule information to control various peripheral devices in the television system. Peripheral devices are, for example, televisions, video tape recorder(s), set-top boxes (including cable boxes), and the like. In the preferred embodiment, a memory located within a personal computer stores a computer program and received data. These data include the television schedule information. A processor uses the computer program to organize the television schedule information into a desired format. The television schedule information is then displayed on a television screen or on a computer monitor/display in the desired format.

In another embodiment, the invention provides an interactive television schedule system which can access television schedule information from remote databases or network servers, such as the Internet or World Wide Web, and provide user access to these databases and servers. Access to computer networks is provided without tying up any phone lines, and without the need for a personal computer. In a preferred configuration, a cable modem located within a cable system provides access to the Internet. A memory within the cable system stores a computer program and any data received from the cable modem, such as the television schedule information. The cable system further include a processor, which uses the computer program to organize the television schedule information into a desired format. The television schedule information is then displayed on a television screen, computer monitor, PCTV or the like in the desired format.

In yet another embodiment, the present invention provides a system and method for allowing the user to contextually link with a remote database, network server or on-line service, and search and select more information relating to specific areas of interest or concerns associated with a program in the television schedule information system. In this embodiment, the system includes a viewer interface having a display for displaying television schedule information to a viewer, a data line coupled to the display for communicating with an external computer network, and a memory having software for retrieving linking data from the computer network. Preferably, the linking data is contextually related to information in the television schedule guide, such as a program's title or content. The external computer network will preferably include the Internet, the World Wide Web and other existing network servers. In this way, the user of the television schedule system may conduct a comprehensive search for information about a particular program/television show or for information relating to the show, the actors, the actresses, the show's theme and the like.

In another embodiment of the invention, a system and method is provided for accessing television schedule information from one or more file servers on a computer network, such as the Internet or the World Wide Web. The television information guide may be accessed and viewed through a computer system, a television system, a PCTV, or a simple display coupled to a communication link, such as a telephone line or the like. The television schedule guide will preferably be stored as one or more files (e.g., websites) on one or more file servers that are connected to each other on a network, which can be accessed by any viewer having access to the network. The television schedule guide or website may be configured for viewing and interacting with television information directly on-line, or it may be configured for downloading the information into a local processor coupled to the viewer interface. The guide or website will provide listings information for all channels in the viewer's local cable line-up. The website may also be capable of creating personalized TV listings with search and sort features that allow the viewer to call up favorite programming choices based on categories, such as channel, day, actor, movie genre or other desired categories.

In yet another embodiment of the present invention, a system and method is provided for directly linking television viewers with broadcasters and advertisers during the broadcast of a commercial or program. In this embodiment, the system includes a viewer interface, such as a television, computer, PCTV or a television coupled to a computer system, and a communication device for coupling the viewer interface with a computer network, such as the Internet or World Wide Web. A television guide database or network server is coupled to the computer network, or directly to the viewer interface for providing the television schedule information to the viewer. The viewer interface will have a memory and a processor with appropriate software (not shown) for searching, retrieving and interacting with information from the television guide database, or the commercial databases coupled to the computer network. Alternatively, this function may be provided through the computer network by allowing the viewer to access an application or applet (e.g., a JAVA™ applet) having the appropriate software to run the television schedule guide on a display.

In the above embodiment, commercial providers (e.g.,Budweiser) and/or television station broadcasters (e.g., ABC) may also have databases coupled to the viewer interface. In this manner, the viewer may directly access these databases during the broadcast of a television program, or while the viewer is browsing through the television schedule guide. For example, the viewer may purchase goods and services directly through the commercial sponsor, or through a delivery system provided by the television schedule guide. This type of advertising allows the advertiser to directly target a particular program, and it allows the viewer to directly purchase the products during the advertisement. Consequently, viewers will not forget the advertisement or simply lose motivation to spend money or request information after the commercial or program is over.

According to one embodiment there is provided a television schedule system with television schedule information comprising:
a data input for receiving data;
a memory for storing a computer program, information associated with a viewer and said received data, said information associated with a viewer being input by the computer viewer, said data including said television schedule information;
a processor coupled to said memory, said processor capable of using said computer program to organize said television schedule information into a desired format;
a user input for receiving user selections; and
a display for displaying said television schedule information in said desired format.

Preferably the system further comprises a computer accessory for transmitting television program associated information to a television system; and preferably wherein said computer accessory comprises:
a processor;
a clock coupled to processor, said clock maintaining current time;
a battery coupled to said processor, said battery providing a continuous supply of power;
a memory coupled to said processor, said memory storing key parameters needed for selected television programs; and
a transmitter, coupled to said processor, wherein said processor uses said clock and said memory to provide information for transmission by said transmitter to control said television system.

Preferably a recording device connector is used for automatic tuning and automatic recording of selected programs, said recording device connector comprises a receiver for receiving information related to selected television programs.

According to another aspect there is provided a television schedule system with television schedule information comprising:
a viewer interface having a display; and
a computer accessory remote from said viewer interface, comprising:
   a data input for receiving data;
   a memory for storing a computer program and said received data, said data including said television schedule information; and
   a processor coupled to said memory, said processor capable of using said computer program to organize said television schedule information into a desired format;
   wherein said computer accessory transmits said television schedule information in said desired format to said viewer interface for display thereon.

According to another aspect there is provided a method of providing a computer system with television schedule information, comprising the steps of:
receiving data, said data including television schedule information and information associated with a computer user;
storing said data in a memory, said memory being coupled to said computer system;
organizing said television schedule information into a desired format, said desired format determined by the computer user; and
displaying said organized television schedule information on a display in said computer system.

Preferably, the data are received from at least one of a satellite transmission and a land line connection; and preferably wherein said land line connection provides network access, and said data is received from a network; and preferably wherein said network access provides connection to the internet.

Preferably, wherein a computer program organizes said television schedule information, said computer program being stored in said memory; and/or the method further comprises further the step of controlling a television system tuner with said computer system; and/or wherein said step of controlling comprises the step of programming a VCR to record a program selected in said computer system.

Preferably the method further comprises the step of controlling a television/video board located within said computer system to display a selected television program on said computer display, said selected television program being selected from said television schedule information displayed on said computer display in said desired format; and/or further comprising the step of automatically storing a selected television program in said memory, said selected television program being selected from said television schedule information displayed on said computer display in said desired format.

According to another embodiment there is provided a method of recording selected programs on a video recorder, comprising the steps of:
installing a schedule program and a control system in a viewer interface;
inputting schedule information to said viewer interface for use with said schedule program;
selecting a program for recording on said video recorder, said selecting being done with said viewer interface; and
transmitting segments of said schedule information with said control system to said video recorder for recording of said selected programs.

Preferably, said inputting is done with a modem which receives said schedule information via the internet; and/or wherein said transmitting step comprises:
transmitting first signals from a personal computer to a television system controller;
storing information for control of said video recorded in said television system controller; and
transmitting several signals from said television system controller to said video recorder for control of said video recorder; and/or wherein said step of installing comprises the steps of:
   installing a first transmitter in said personal computer;
   installing a receiver at said video recorder; and
   wherein said transmitting step comprises transmitting signals directly or indirectly to said video recorder.

According to another embodiment there is provided a television schedule system comprising:
a viewer interface with a display for displaying television schedule information; and
a cable system having a first data line for receiving data from a computer network, and a memory with software for receiving, organizing, and displaying any received data into a television schedule guide, the cable system including a second data line coupled to the viewer interface for displaying the television schedule guide on the display.

Preferably, the data line is a cable modem; and/or wherein the viewer interface is a television system having a television and a user input device; and/or wherein the viewer interface is a computer monitor coupled to the processor and the memory; and/or wherein the memory includes software for receiving television schedule information over a period of time, and organizing the television schedule information into a desired format for display to the viewer; and/or wherein the cable modem provides access to a server on the computer network so that the viewer may interact with files on the server; and preferably wherein the memory includes world wide web compatible software for accessing an internet world wide web server.

According to another embodiment there is a contextual linking system for use with television schedule information comprising:
a viewer interface having a display for displaying television schedule information to a viewer;
a data line coupled to the display for communicating with a computer network; and
a memory having software for retrieving linking data from the computer network, the linking date being contextually related to television programs in the television schedule information.

Preferably, the memory further comprises software for searching said linking data in the computer network; and/or wherein the data line is selected from the group consisting essentially of a telephone line, a cable modem, coax cable and optical fiber; and/or wherein the television schedule information is located within the memory; and/or wherein the television schedule information is located in a database on the computer network, the memory including software for retreiving the television schedule information and organizing into a desired format; and/or wherein the memory includes software for searching and selecting information within the computer network that is contextually related to television programs within the television schedule information; and/or wherein the memory stores programs that have been selected by the viewer; and/or further comprising a database containing each program within the television schedule, the database including a plurality of criteria, with each program being associated with one or more criteria; and preferably wherein the memory includes software for designating one or more criteria for each program that is selected and for searching databases on the computer network to determine other programs that include the designated criteria; and preferably further comprising a processor configured to automatically search the database for programs within the designated criteria.

Preferably, the memory includes world wide web compatible software for accessing internet world wide web file servers; and/or wherein the linking data includes contextually related goods and services, the memory including software for allowing the viewer to purchase the contextually related goods and services.

According to another aspect there is provided a method of providing a television system with television information linking, comprising:
displaying television schedule information on a viewer interface; inputting user selections for television programs within the television schedule information;
receiving linking data contextually related to the television programs from a computer network; and
displaying said linking data on the viewer interface; and preferably further comprising searching the computer network for linking data that is contextually related to television programs within the television schedule information.

Preferably the method further comprises retreiving the television schedule information form a database on the computer network and organizing the television schedule information into a desired format on the viewer interface; and preferably wherein the memory stores programs that have been selected by the viewer; and preferably further comprising:
storing a plurality of criteria within a database; and
associating each television program within the television schedule information with one or more of the criteria; and preferably further comprising designating one of the criteria for each program that is selected and searching databases on the computer network to determine other programs that fall within the designated criteria; and preferably wherein the searching step is carried out by a processor that automatically searches the databases for programs falling within the designated criteria.

According to one aspect there is provided a television schedule system for television schedule information comprising:
a visual interface having a display for displaying television schedule information;
a communication device for connecting the visual interface to a computer on a network;
a data input for receiving television schedule information from the computer; a memory having software for searching and retrieving the television schedule information based on user selections; and
a user input coupled to the memory for inputting said user selections.

Preferably, the memory includes world wide web compatible software for accessing an internet world wide web file server; and preferably wherein the internet world wide web file server includes a file having television schedule information, the memory including software for searching and retreiving the television schedule information from the file and organizing the television schedule information; and/or wherein the internet world wide web file server includes a file having television schedule information, the memory including software for downloading the file into the visual interface; and preferably wherein the memory include software for allowing the viewer to navigate through the cells within the grid to view different programs; and/or wherein the memory includes software for allowing the viewer to send and receive electronic mail from the viewer interface.

According to another embodiment there is provided a television schedule system comprising:
one or more servers each having a memory for storing a computer program and television schedule information, and a processor coupled to said memory, said processor capable of using said computer program to organize said television schedule information into a desired format; and
a data line for coupling the server to a network;

Preferably, the servers are network file servers having a unique address; and preferably wherein the network file servers includes HyperText Transport Protocol server software to permit each server to function as an internet World Wide Web server, and the memory includes World Wide Web compatible software for allowing access to the file servers.

Preferably, the television schedule information is organized into a grid include a plurality of cells with each cell containing a television program, the grid further including a first column with times and a second, perpendicular column with television channels; and/or wherein the memory include software for allowing the viewer to navigate through the cells within the grid to view different programs; and/or wherein the memory includes software for selecting a geographic region, the memory including a television schedule guide associated with each geographic region.

Preferably, the geographic regions are countries; and/or wherein the geographic regions are states; and/or wherein the geographic regions correspond to local cable companies; and/or wherein the second column includes television networks that are generic to a plurality of geographic regions; and preferably wherein the memory includes software for selecting a time zone, and for adjusting the times in the first column of the grid based on the time zone selected by the viewer.

According to one embodiment there is provided a television schedule system comprising:
a viewer interface having a display;
a database containing television schedule information;
a communication device for connecting the visual interface to the database; and
a memory coupled to the viewer interface having software for retrieving said television schedule information and organizing said information into a desired formal on the display.

Preferably, the database is coupled to a computer network and the communication device includes a data line coupled to the computer network for linking the viewer interface to the database; and preferably wherein the database is a network server having a unique address and being configured to follow a common network protocol; and preferably wherein the network protocol is the Transmission Control Protocol and the Internet Protocol.

Preferably, the viewer interface includes a visual indicator on the display for selection by the viewer, the memory including software for accessing one or more databases within the computer network when the visual indicator is selected; and/or wherein the visual indicator is an icon covering a portion of the display; and/or wherein the databases include one or more commercial provider databases and one or more program broadcaster databases; and/or further comprising a processor configured to allow the viewer to interact with the databases on the computer network.

### BRIEF DESCRIPTION OF THE DRAWINGS

Fig. 1 is a schematic view of a representative computer system coupled to a television system;
Fig. 2 shows an example of a television schedule guide as displayed on a computer screen along with a user input device;
Fig. 3 illustrates a computer accessory for the computer system;
Fig. 4 illustrates a recording device connector for the television system;
Fig. 5 illustrates a process flow chart for the installation procedure;
Fig. 6 illustrates a process flow chart for the operation of the schedule/control system herein;
Fig. 7 illustrates several arrangements for providing television schedule information from a database to a television for display;
Fig. 8 illustrates an interactive television schedule system according to the invention incorporating a cable system coupled to a television system;;
Fig. 9 illustrates a preferred arrangement for providing television schedule information from the cable system of Fig. 8 to a television for display to the viewer;
Fig. 10 illustrates a system and method for accessing television schedule information at a network file server on the internet;
Fig. 11 schematically illustrates a system and method for viewer interaction with commercial advertisers and program sponsors within the television schedule information system of the present invention;
Figs. 12A and 12B are schematic views of a representative program guide and a channel guide, respectively, for use with the television system of Fig. 1;
Figs. 13A-13C are schematic views illustrating a method for selecting a program information menu, moving to the program guide of Fig. 12A and browsing through information menus from other programs;;
Figs. 14A-14E illustrate a Video On Demand menu and an associated submode menu;
Figs. 15A-15C illustrate a method for accessing and sending mail messages;
Figs. 16A-16C illustrate a Services Menu and a method for accessing special services and for purchasing items; and
Figs. 17A-17F illustrate a system and method for contextually linking a program to a database on a computer network.

### DESCRIPTION OF THE SPECIFIC EMBODIMENTS

The present invention provides systems and methods for providing television schedule information to a viewer, and for allowing the viewer to link, search, select and interact with information in a remote database, computer network or online server, e.g., a network server on the Internet or World Wide Web. The television schedule information can be displayed on a variety of viewer interfaces, such as televisions screens, computer monitors, PCTV screens and the like. The television schedule information may be stored on the viewer's computer, television, PCTV, or a remote server (e.g., a website), or the television schedule information may be downloaded from a remote database or computer network to the viewer's computer, television or PCTV. Suitable television schedule systems or video guides that can be used with the present invention are described in commonly assigned U.S. Patent Nos. 5,353,121, 5,479,266, the complete disclosures of which are hereby incorporated by reference. The systems and methods of the present invention may also be useful with video guides available under the name of SuperGuide™ from The SuperGuide Corporation of Shelby, North Carolina.

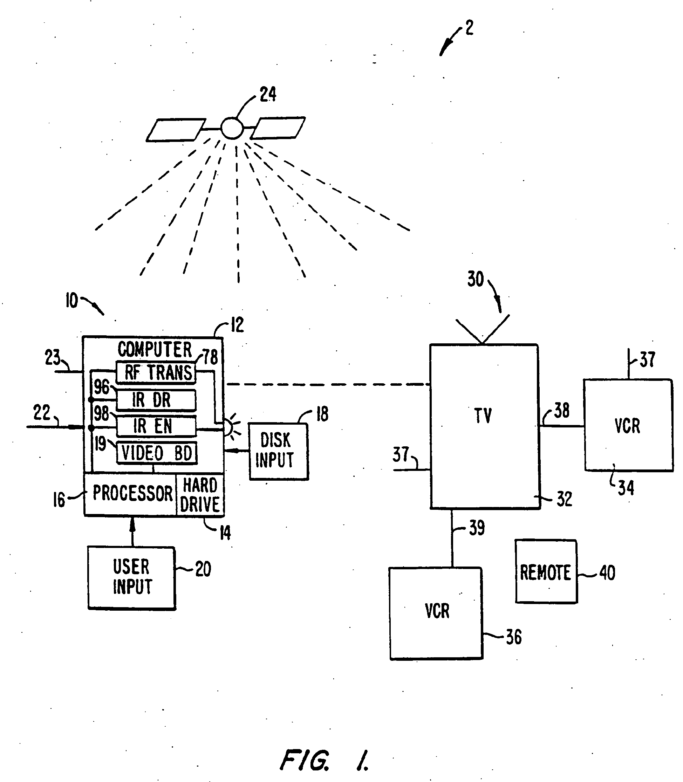

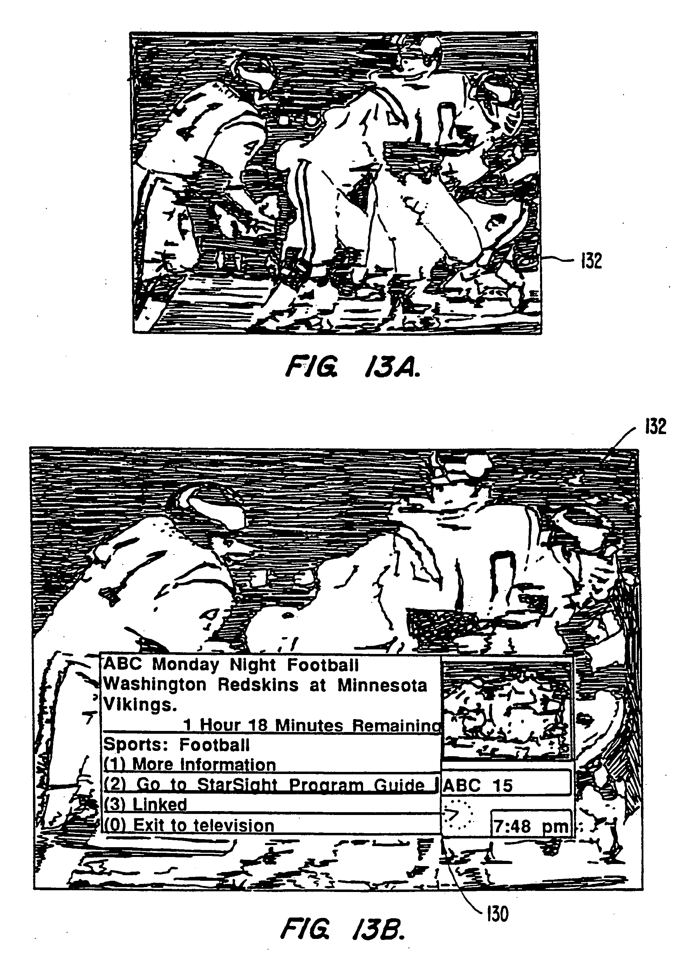

In one embodiment, the invention incorporates an interactive computer system which assists the viewer in utilizing television schedule information and linking with a database to search and retrieve information. Preferably, the information is contextually related to television programs within the television schedule information. Referring to the drawings in detail, wherein like elements are indicated by like numerals, a representative television schedule system 2 for use with the contextual linking system and method of the present invention is illustrated in Figs. 1-7. As shown in Fig. 1, schedule system includes a computer system 10 coupled to a television system 30. Computer system 10 includes a standard computer 12 which is, for example, any available personal computer (e.g., IBM compatible, Macintosh, and the like). Computer 12 can also be located within a set-top box (e.g., a DSSbox). Computer 12 contains a hard drive 14, a processor 16 and a disk input 18 for providing computer 12 with various, additional software. An input device 20 allows a viewer to interact with computer 12 and/or a television schedule guide (described below and illustrated in Figs. 12-17). Line 23 is connected to an available serial, parallel or other data port 23 on computer 12. This line 23 is used to connect other devices/components to computer 12.

In another embodiment, computer system 10 may be combined with television system 30 to form a PCTV. In this embodiment, the computer will usually include a processor that may be used solely to run the program guide and associated software, or the processor may be configured to run other applications, such as word processing, graphics, or the like. The computer will usually be incorporated into the television set so that the television display can be used as both a television screen and a computer monitor. Alternatively, the television may be incorporated into the computer so that the computer monitor performs this dual function. Usually, the PCTV will include a number of input devices, such as a keyboard, a mouse and a remote control device, similar to the one described above. However, these input devices may be combined into a single device that inputs commands with keys, a trackball, pointing device, scrolling mechanism, voice activation or a combination thereof.

Television system 30 includes a television 32, which may be any commercially available television, and a user input device 20. Television system 30 may or may not include a video tape recorder (VCR). In this embodiment, VCRs 34 and 36 are coupled to television 32. These VCRs 34 and 36 can be, for example, any commercially available VCRs or any other type of recording device (analog or digital). Input device 20 allows the viewer to interact with television 32, VCR 34, and/or VCR 36. Input device 20 may be a remote control, keyboard, mouse, a voice activated interface or the like. A suitable input device for use with the present invention is described in U.S. Provisional Patent Applications Serial Nos. not yet assigned, filed June 17, 1996 (attorney work docket nos. 14774-004000 and 005500), the complete disclosures of which are incorporated herein by reference. A line 37 is used to connect other devices to VCR 34. Other devices can also be connected in series between VCR 34 and television 32 via line 38. With this configuration, computer 12 (or computer system 10) and television 32 (or television system 30) can be located in different rooms within a private residence or a commercial building.

In one embodiment, a computer program provided on diskettes, a CD ROM or other medium contains the software needed for receiving, organizing and displaying data for the television schedule guide. These diskettes are inserted in disk input 18 and the software for these diskettes is stored within computer 12 on hard drive 14 or on another mass storage location. This action can be performed by, for example, the user or a serviceperson. The computer program can also be provided, for example, via downloading from a satellite 24, transmission through the internet or other on-line service, or transmission through another type of land line 22 (e.g., coax cable, telephone line, optical fiber, or the like).

In addition to the computer program, data for the basic schedule information and other related data (e.g., data relating to a particular show) are needed for the generation and maintenance of the television schedule guide. These data are received, in the preferred embodiment, via line 22; they can also be provided via a satellite broadcast from satellite 24. Additionally, the television schedule information and related data can be sent directly to television 32 via satellite 24. In this arrangement, the television schedule information and related data does not have to be transmitted from computer system 10 to television system 30.

In one embodiment, line 22 is a telephone line which provides access to the internet or other on-line service via, for example, a regular modem or direct modem access to a schedule provider. The schedule data are then provided to the viewer from a remote database via the internet or other on-line service, or directly from the service provider. As stated above, line 22 can also be, for example, coax cable, optical fiber or any other land line which can provide data to computer 12. The software program saved on hard drive 14 then utilizes the data received on line 22 to generate a television schedule guide. The user can retrieve this generated television schedule guide when desired.

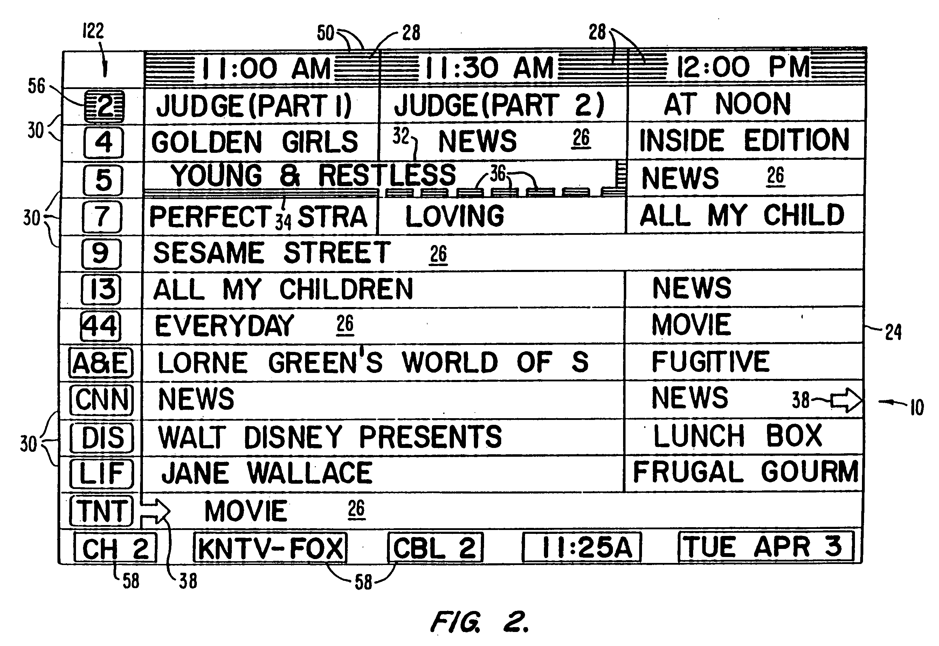

Fig. 2 shows an example of a television schedule guide as displayed on a computer screen along with a user input device. In the preferred embodiment, the television schedule information is provided in a grid-like display on computer screen 50. In this example, various channels are provided on the Y-axis of the grid guide, and various times are provided on the X-axis of the grid guide. This display can also contain special instructions for the user in screen area 52 and advertisements directed to the user in screen area 54. The television schedule guide in Fig. 2 has been customized by a user such that only channels 2, 3, 4, 5, 7, HBO, SHO and PB S are included in the displayed guide. In one embodiment, a television within computer system 10 or television system 30 can be used as computer screen 50.

The user, via input device 60, can scroll throughout the television schedule information provided in the grid guide. User input device 60 can be, for example, a keyboard with arrow keys, a computer pointing device (e.g., a mouse) or a voice recognition input. By utilizing user input device 60, a user can sort, mix, and do a special customized line-up of channels within the television schedule guide displayed on computer screen 50. In addition, the user can automatically tune to a desired program or can select different programs for automatic recording. For more information on automatic tuning and automatic recording, see U.S. Patent No. B1 4,706,121 and U.S. Patent Application No. 08/423,411; this patent and this patent application are, like the present patent application, assigned to Starsight Telecast, Inc. U.S. Patent No. B 14,706,121 and U.S. Patent Application No. 08/423,411 are hereby incorporated by reference in their entirety for all purposes.

In another embodiment of the present invention, the computer 12 is equipped with a television/video board that contains a tuner. When this television/video board is located in computer 12, a computer user can view selected television programs/shows on computer monitor 50. Therefore, when a user selects a television program for automatic tuning, the television/video board is tuned to the channel carrying the selected television program such that the selected television program is automatically displayed on computer monitor 50.

In the embodiment of the present invention shown in Fig. 1, two programs provided at the same time can be automatically recorded because two VCRs 34 and 36 are present. The user need only select two programs for recording and the present invention will automatically cause the programs to be recorded when they are aired in an unattended fashion. The user can also directly select which device or devices will be recording or tuning for each selected program. For example, the user may wish to have M.A.S.H. 62 recorded by VCR 34 and I LOVE LUCY 64 recorded by VCR 36. In this example, the computer software on hard drive 14, at the program start time, (1) tunes VCR 34 to the channel carrying I LOVE LUCY, (2) turns VCR 34 "on", and (3) activates the record function on VCR 34. If I LOVE LUCY starts at the same time as **M.A.S.H**., the software also, at approximately the same time, (1) tunes VCR 36 to the channel carrying **M.A.S.H**., (2) turns VCR 36 "on", and (3) activates the record function on VCR 36. At the program end time for **M.A.S.H**., the software turns "off" the record function, and then turns "off" VCR 34. The same sequence takes place for VCR 36 when the program end time for **I LOVE LUCY** occurs.

In the preferred embodiment, two electronic devices are used to provide the schedule/control system herein. These two electronic devices allow for the interaction between computer system 10 and television system 30. The first electronic device is a computer accessory and the second is a video tape recorder controller/connector (VCR connector). The second electronic device can also be a television connector, set-top box connector and the like.

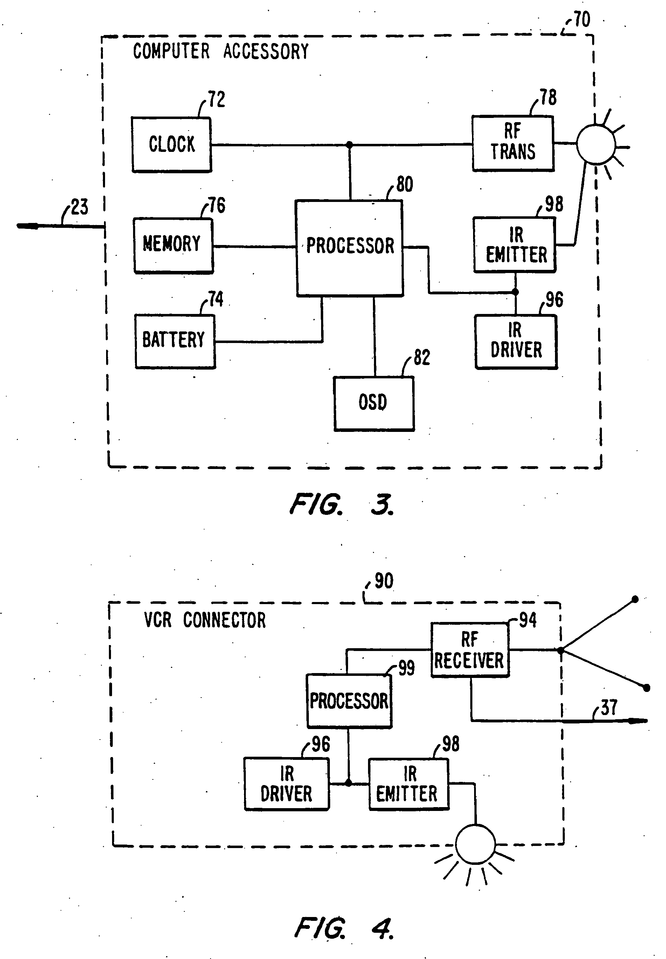

Fig. 3 illustrates a computer accessory for the computer system. Computer accessory 70 is any external hardware capable of controlling television 30, VCR 34 and/or VCR 36. In the preferred embodiment, computer accessory 70 is connected to computer 12 through available serial, parallel or other port 23. Clock 72, located within computer accessary 70 in the preferred embodiment, maintains current time. Battery 74 provides a continuous supply of power when the computer accessory's regular available power is not present. Memory 76 contains the key parameters needed for recording and/or tuning to a selected television program. These parameters include the date of the program, the start time for the program, the end time for the program, the television channel providing the program, and which peripheral device shall be addressed for recording or viewing the program.

Processor 80, also located within computer accessory 70, uses the software in the computer system to provide memory 76 with these key parameters. Memory 76 is a random access memory (RAM) and RF transmitter 78 is, for example, similar to a transmitter provided in a portable telephone or RF wireless headphones. RF transmitter 78 may be substituted with, for example, IR emitters, modulated light signals (i.e., signal sent through optical fibre), or even a hardwire connection. In the preferred embodiment, RF transmitter 78 is used in conjunction with a remotely located VCR connector 90 to communicate parameters needed for automatic tuning and/or automatic recording to television system 30. Processor 80 uses clock 72 and memory 76 to provide the information needed for transmission by RF transmitter 78.

Fig. 4 illustrates a recording device connector for the television system. In the preferred embodiment, recording device (e.g., VCR) connector 90 is coupled to VCR 34 in television system 30, via line 37. This connector 90 can also be a television connector which is connected to television 32. VCR connector 90 contains RF receiver 94 which receives the information transmitted from RF transmitter 78. Infrared (IR) driver 96 then works in conjunction with IR driver 96 and IR emitter 98 to provide any necessary signals to other peripheral devices within television system 30. Processor 99 assists with this process.

For example, if a user decides to tune the television to a certain program which is presently available or to schedule the television to be tuned to a certain program at a future time, the user moves the cursor with user input device 60 to the desired show within computer screen 50 and enters it ("enter" key with a keyboard or "clicking" with a mouse). The information is provided to computer accessory 70 via line 23 and then automatically transmitted via RF transmitter 78 to RF receiver 94. IR driver 96 and IR emitter 98 then take the information from RF receiver 94 and immediately tune the television 32 to the channel providing the selected television program. More than one IR driver 96 may be used for the present invention. For example, one IR driver may be used for television 32, and another IR driver may be used for VCR 34.In addition, computer accessory 70 and VCR connector 90 (or the alternative devices which provide their functions as described below) can be located in different rooms within a private residence or a commercial building.

If the user has selected a program from the computer for recording on VCR 34, at the selected program's start time, the information for activating and recording on the VCR is automatically sent from RF receiver 94, through VCR connector 90, to VCR 34 via line 37. Thus, in the preferred embodiment, at the start time of the selected program, (1) the VCR is turned "on", (2) the tuner (or an external device) is tuned to the channel carrying the selected program, and (3) the record function of the VCR is activated. Later, when the program end time occurs, the record function of the VCR is turned "off", and the VCR is turned "off." In this arrangement, IR driver 96 and IR emitter 98 are not used.

In the preferred embodiment, when IR driver 96 and IR emitter 98 are used, they act in the same way that a remote control would act to control the other peripheral devices (e.g., television 32, VCR 36, and the like) within television system 30. For example, if two programs occurring at the same time are selected for automatic recording, IR driver 96 and IR emitter 98 are used to (1) tune the tuner on a second VCR to the channel carrying the selected program, etc. For additional information on how an IR emitter can be used to act as a remote control, see U.S. Patent No. 5,151,789 to Young, which is hereby incorporated by reference in its entirety for all purposes.

In another embodiment of the present invention, VCR connector 90 is connected in series between VCR 34 and television 32 via line 38. In this arrangement, IR driver 96 and IR emitter 98 are not needed because information received by RF receiver 94 can be sent to either VCR 34 or television 32 via line 38. For example, line 38 is used to transmit the data for automatic tuning. When a user selects a television program for immediate viewing, a tuning command for changing the television tuner to the channel carrying the desired program is sent from RF transmitter 78 to RF receiver 94. Processor 80 then sends this tuning command from RF receiver 94 to television 32 via line 38.

In yet another embodiment of the present invention, IR driver 96 and IR emitter 98 are located in computer accessory 70 (see Fig. 3). When this configuration is present, VCR connector 90 is not needed. For example, when a desired television program is selected for automatic tuning, IR driver 96 and IR emitter 98 work in conjunction to tune television 32 to the channel carrying the desired program. Similarly, when a desired television program is selected for automatic recording, IR driver 96 and IR emitter 98, at the desired program start time, (1) tune the VCR to the channel carrying the desired program, etc. This arrangement can also be used when multiple desired television programs, airing at the same time, are selected for automatic recording. This is done in the same manner as described above. Also, if desired, the data providing the television schedule information to computer 12 can be organized into a desired format and then transmitted via computer accessory 70 to television 32 for immediate display on television 32. For automatic display on television 32 in this arrangement, computer accessory 70 must contain on-screen display generator (OSD) 82.

In yet another embodiment of the present invention, computer accessory 70 is located inside computer 12 (see RF transmitter 78 location in computer 12, Fig. 1) and/or VCR connector 90 is located inside, for example, VCR 34 or television 32. The location of computer accessory 70 and VCR connector 90 is not critical because the IR emitter allows for remote control of all of the peripheral devices.

In yet another embodiment of the present invention, the components of both computer accessory 70 and VCR connector 90 are located inside computer 12. Therefore, RF transmitter 78 and RF receiver 94 are not required.

Computer 12 most likely has an internal battery and clock provided, so battery 74 and clock 74 may not be needed. Memory 76 can be provided by hard drive 14. Processor 80 may not be needed because processor 16 can perform its functions. In this embodiment, IR driver 96 and IR emitter 98 provide the tuning and recording parameters to television 32 and VCRs 34 and 36 (see Fig. 1 for placement of IR driver 96 and IR emitter 98 within computer 12). Similarly, if computer 12 contains television/video board 19 in this arrangement, a selected television program can be viewed on computer screen 50. Additionally, a selected television program can be stored within computer 12 in a memory or mass storage device (e.g., hard drive 14, disk or tape). Thus, no need would exist for the transmission of parameters needed for automatic tuning and automatic, unattended recording, and the associated IR devices 96 and 98 would not be present. Finally computer 12, television 30, VCR 37 and all additional electronic devices could be on a home network. In this arrangement, no transmitters or internal receivers would be necessary.

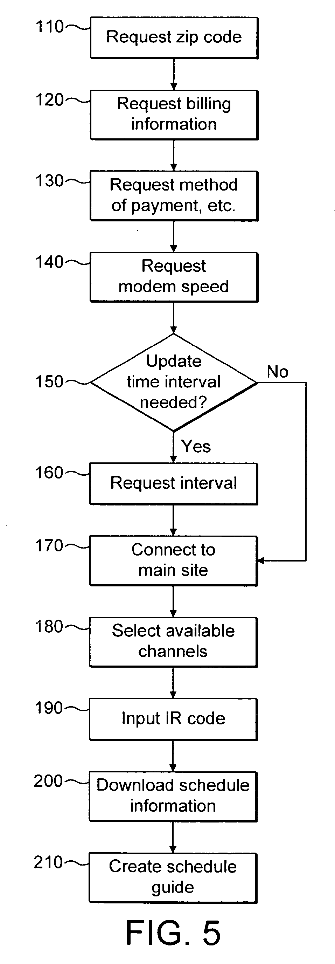

Fig. 5 illustrates a process flow chart for the installation procedure. This process flowchart reveals the sequence used for installing the computer program needed for receiving, organizing, and displaying the television schedule information grid guide. This installation process flow allows for an account setup and for the downloading of schedule information. The data needed for the television schedule guide are downloaded to hard drive 14 in the preferred embodiment. As stated above, diskettes providing the computer program are placed in disk input 18 and installed on hard drive 14. The user is then asked to input various information. The system first requests the user's zip code at step 110. Billing information is requested at step 120, and method of payment along with associated information for payment is requested at step 130. In an alternative embodiment, billing information (e.g., credit care information or the like) may be input each time a user connects to an on-line service. Additionally, an automatic confirm may take place at step 120. For example, a user may already have an identification number from previous system use. Confirmation of this identification number would allow the system to access stored user profile information which contains the user's billing data.

In the preferred embodiment, modem speed for the communication setup is requested at step 140 (this step is optional). The computer program, in conjunction with processor 16, checks to see if the update time interval is needed at step 150. The update time interval determines how often the television schedule guide information is updated for the user. For example, updates could take place each time computer 12 is booted-up, once a day, or 4 times a week. If the update time interval is needed, a request is sent to the user at step 160. If the time interval is not needed, a connection to the main site is made at step 170. The main site provides the data needed for the television schedule guide and receives information, such as a credit card number for billing purposes, via line 22. The user can then select which available channels will be displayed on computer screen 50 at step 180.Thus, the user can customize the displayed information at step 180. The user is then asked to input or select IR codes at step 190. These IR codes are used for communicating with peripheral devices within television system 30. In the preferred embodiment, these IR codes are sent to memory 76 within computer accessory 70. The data needed for the television schedule are then downloaded via line 22 at step 200. Processor 16 and the computer program installed on hard drive 14 work in conjunction to create the schedule guide for display on computer screen 50 at step 210.

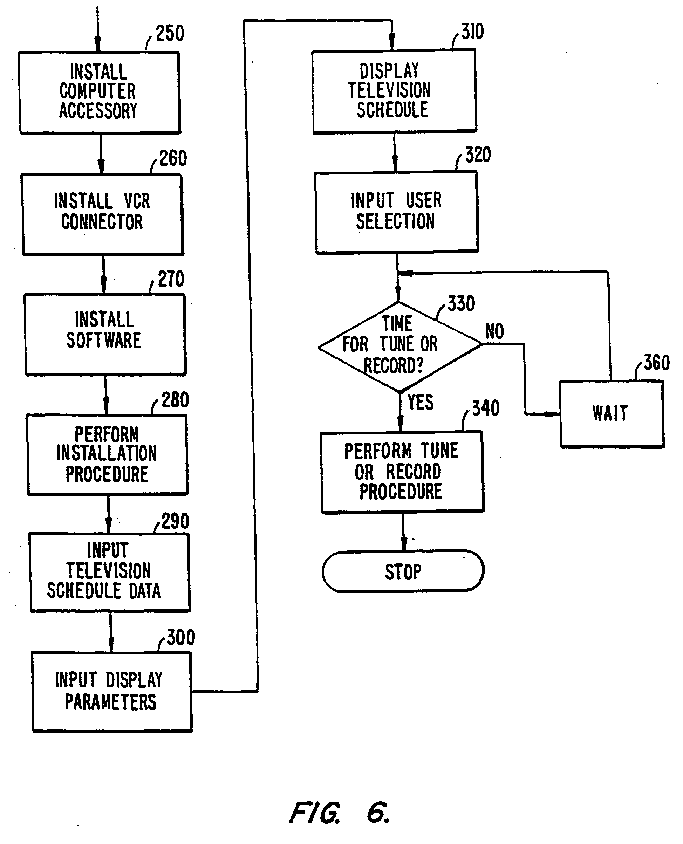

Fig. 6 illustrates a process flow chart for the operation of the schedule/control system herein. At step 250, the user installs computer accessory 70 by coupling it to computer 12 via available serial or parallel port 23. At step 260, the user installs VCR connector 90 by connecting it to VCR 34 via line 37. At step 270, disk input 18 is used to provide hard drive 14 with the software needed for receiving, organizing and displaying data which provides the system's television schedule guide. This software also supplies the automatic tuning and automatic, unattended recording of the present invention. Thus, this software is taken from diskettes and stored/installed on hard drive 14. At step 280, the user or service person performs the installation/set-up procedure set forth in Fig. 5.At step 290, the data needed for updating the schedule information are received via telephone line 22.

At step 300, the user can input any additional desired display parameters for the display of the television schedule guide. For example, the user can have certain channels eliminated from the displayed television schedule guide, or the user can select a particular order for each of the television channels within the guide. At step 310, the television schedule guide is displayed, upon user request, on computer screen 50 as shown in Fig. 2. At step 320, the user can enter a selection from the television schedule guide via user input device 60. The user can select a program for either automatic tuning or for automatic, unattended recording. At step 330, the software determines if the time for the automatic tune or record is equal to the present time. If the program start time is not equal to the present time, then the software waits at step 360.If the time equals the present time, then the software performs automatic tuning or automatic recording at step 340. Automatic tuning and automatic recording is set forth in U.S. Patent Application No. 08/423,411, as stated above. The process flow chart of Fig. 6 is then complete.

In another embodiment of the present invention, a computer program located, for example, on hard drive 14 can monitor and track user selections. This computer program can then be used to provide suggested television programs to the user. Additionally, if desired, the computer program can automatically schedule suggested television programs for automatic tuning and/or automatic, unattended recording.

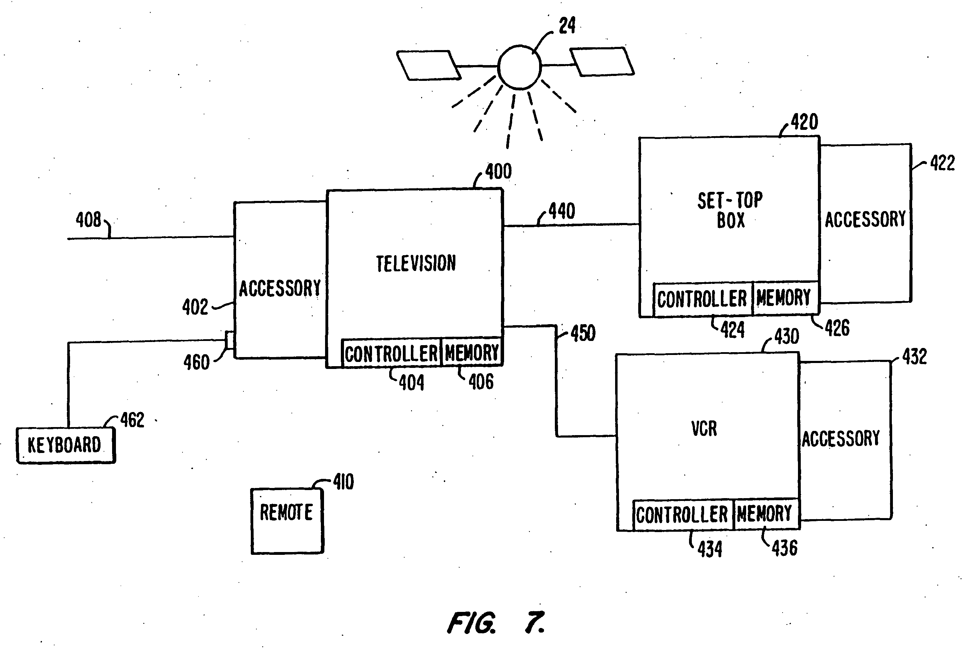

Fig. 7 illustrates several arrangements according to the present invention for providing television schedule information from an external database to a television for display. In one embodiment, on-line information providers (Prodigy, America On Line, Compuserve, MSN, AT&T, etc.) provide access to a database which contains the television schedule information. These on-line information providers can transmit data to television 100. In this embodiment, a modem within accessory 102 is utilized to provide the data. Accessory 102 is attached to television 100 and directly connected to telephone line 108 via the modem. The modem for access to the on-line service can also be located within television 100. Software, located either within accessory 102 or television 100, is used to search for and provide the data, along with providing several other features described below.

The available data, displayed on television 100, can emulate what a computer on-line user normally sees when accessing the internet through a personal computer. This television schedule data can also be further enhanced to "tie into" the televisions show that the user is viewing. Alternatively, accessory 102 may be replaced by accessory 122 which is attached to set-top box 120 (e.g., a cable box). The data provided via the on-line information provider is then transmitted to television 100 over line 110. Similarly, accessory 132, attached to VCR 130, can be used to obtain the television schedule data. The data would then be transmitted from VCR 130 to television 100 over line 150.

In another embodiment, the database with the television schedule information is located in memory 106 within television 100. Controller 101 is used to obtain the data from memory 106 so that it can be displayed on television 100. Alternatively, the database with the television schedule information could be located in memory 126 (within set-top box 120) or in memory 136 (within VCR 130). Controller 121 or controller 131 would be used to obtain the data which would then be sent to television 100 for display via line 110 or line 150. Therefore, the technology that enables the television schedule information to be provided from a database to a television for display is not specific to any given data system. In summary, this technology can be resident in the user's set-top box 120, television 100, VCR 130, personal computer or the like.

The television schedule information provided from a database can be used to provide information which is independent of the viewer's program choice. For example, from a television schedule guide, the user can utilize remote control 110 to press a Services button. This Services button can be located on remote control 110 or within the television schedule guide display. When the Services button is pressed, the user is given choices such as News, Weather, Sports, Scores, Financial Data, Local Traffic, etc. Using remote control 110, the user can then select the area or title of interest, and the associated information from the database is provided If accessory 102 is used, a modem accesses the online service which provides the information from the database. Once this connection is made, the user has two-way communication with the on-line service provider. The user can then go deeper into the given selections or, if requested and keyboard 162 is available, can access the Internet and enter chat rooms or other interactive services. In the preferred embodiment, keyboard 162 is either an IR keyboard or connected to port 160 on accessory 102.

In yet another embodiment, a television program title and/or a program's content is contextually linked to an on-line service or to an available database. In this arrangement, a user, in conjunction with the data made available through an electronic program guide (or navigational system), can link, search and select more information relating to specific areas of interest or concerns associated with a program or a program's title. In the preferred embodiment, a user of an electronic program guide (e.g., as described above) can conduct a search for information about a particular program/television show or for information relating to the show, the actors, the actresses, the show's theme, and other related information through selection via a user interface.This linking of program title and/or program content to additional related information could be operable whenever a program title is accessible in a electronic program guide. Additionally, this linking could be available whenever a user requests it via the currently tuned program.

For example, a user previewing the program such as a movie (e.g., "Casablanca") can receive information regarding (1) the actors and actresses in that movie, (2) other movies released during the same time period, (3) associated available products, (4) related travel packages, and (5) advertisements and promotions available through primary, secondary or third party vendors. Utilizing a user interface such as remote control 110 or keyboard 162, the user can indicate to the electronic program guide what information they would like to view on television 100. The electronic program guide then lists a selection of choices for the user. In the preferred embodiment, the choices are associated with the context of the selected program and can be changed via the electronic program guide supplier. In the "Casablanca" example, the choices might be (1) Other Humphrey Bogart Movies, (2) Other Lauren Bacall Movies, (3) Other Movies Released in the Same Era, or (4) Associated Products. The user selects from the presented choices, and the electronic program guide contacts and communicates with the database of available information for more detailed information relating to the user's choice. Once contact and communication is established between the user and the database of available television information, the electronic program guide acts as an agent to assure that the information flow and appropriate data is exchanged. At this point, the user can delve deeper into the available information by selecting from a series of further choices or related topics. For example, if the user chooses (1) Other Humphrey Bogart Movies option, the electronic program guide contacts and communicates with the selected database of available information. The database of available information is then used to collect the requested data of other Humphrey Bogart movies. The selected choice is transmitted and used by the electronic program guide as its contextual reference for the search. A list with the search results is then displayed on television 100.

Once the user sees the list of other Humphrey Bogart movies, the user can select any of the available titles for recording or watching. In the preferred embodiment, each time the available database is contacted and searched, previously selected movies can be identified. In addition, a user can select certain types of programs to be recorded or watched before any particular program is available to the electronic program guide. Moreover, each time a connection is made to an on-line service, the software can search the database and set the selected types of programs to be recorded. These features enable a consumer to never miss a favorite program.

The system and method of the present invention may be configured to automatically or manually customize the television schedule guide to an individual viewer or a group of viewers, e.g., a family. In this embodiment, the remote control device may be used to select certain programs, and a memory stores the television programs that have been selected by the viewer. The programs can be selected for a variety of reasons, such as a designated the program as a favorite, placing a reminder to watch the program or, when the television schedule system includes a recording device, placing an automatic reminder to the program guide to record the program. The user may also customize specific preferences based on a program title. Through a series of repetitive operations, the electronic program guide can select programs, titles or services that the user would likely be interested in. This can be accomplished through a user interface wherein the user answers preference or choice questions, or through heuristic learning accomplished through the electronic program guide. The electronic program guide would include software for performing this customization.

In an exemplary embodiment, the system includes a database containing each program within the television schedule. The database may be included within a computer integrally combined with the television (e.g., PCTV), a computer that is coupled to the television through suitable lines, or the database may be accessed from a remote computer, e.g., via the internet or other communication medium. Within the database, each program is associated with a variety of criteria or features, such as particular actors, actresses, directors, the type of movie (e.g., action, comedy) and the like. When the viewer selects a program as a favorite, for example, he or she will have the option of designating the criteria or reason(s) that the program is a favorite (i.e., actor, director, etc.).The computer will include a processor and suitable software for automatically searching the database for other programs having the same criteria. The processor will automatically place the programs that include the designated criteria into the selection window and provide visual indication of each program in the matrix of cells in the program guide. In this way, the program guide will automatically customize itself to the individual viewer to facilitate use of the television schedule. A more detailed description of this method can be found in commonly assigned co-pending Provisional application Serial No. not yet assigned, filed June 17, 1996 (attorney docket no. 14774-005500), the complete disclosure of which has previously been incorporated by reference.

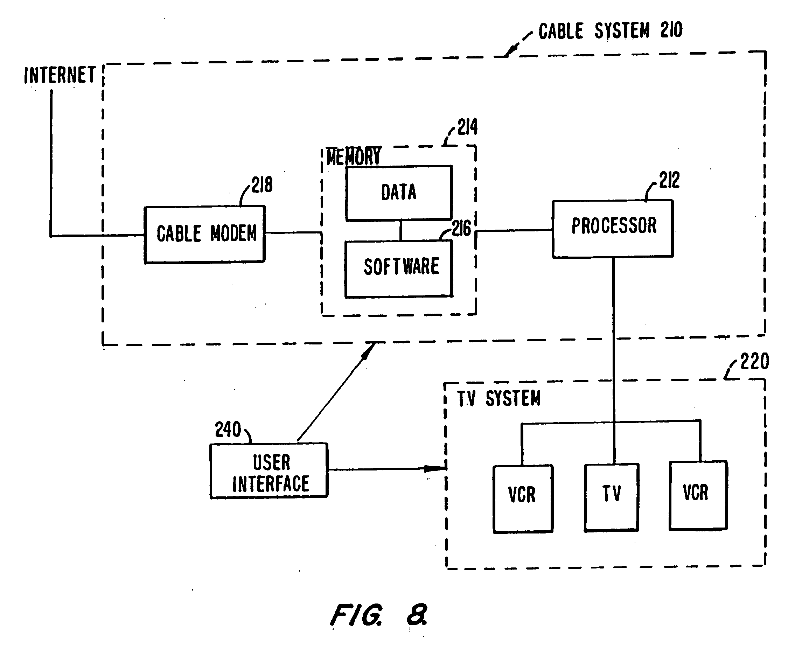

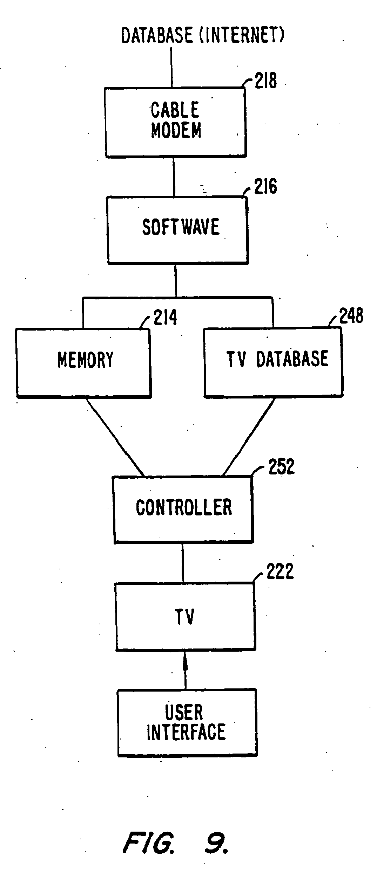

Figs. 8 and 9 illustrate an interactive television schedule system 200 according to the present invention which can access television schedule information from the internet, and provide user access to the internet. Access to the internet is provided in this embodiment without tying up any phone lines, and without the need for a personal computer. As shown in Fig. 8, interactive television schedule system 00 includes a cable system 210 coupled to a television system 220. Cable system 210 generally includes a processor 212, and a memory 214. Television system 220 includes a television 222 and a user interface device 240. Similar to the above embodiment, television system 220 may include VCRs 224 and 226 coupled to television 222. In a specific embodiment, memory 214 of cable system 210 stores software 216 for receiving, organizing, and displaying any received data into a television schedule guide. In addition to software 216, data for the basic schedule information and other related data (e.g., data relating to a particular show) are also stored in memory 214 as they are needed for the generation and maintenance of the television schedule guide. This data is received, in the preferred embodiment, via a cable modem 218, which may access the data from the intemet.The software 216 then utilizes the data received from cable modem 218 to generate a television schedule guide. The user can retrieve this generated television schedule guide when desired. In the embodiment of the present invention shown in Fig. 8, two programs provided at the same time can be automatically recorded because two VCRs 224 and 226 are present. The user need only select two programs for recording and the present invention will automatically cause the programs to be recorded when they are aired in an unattended fashion. The user can also directly select which device or devices will be recording or tuning for each selected program. For additional information, see commonly assigned U.S. Patent No. 5,151,789 to Young, the complete disclosure of which has previously been incorporated by reference.

Fig. 9 illustrates an arrangement for providing television schedule information from cable system 210 to a television for display. In one embodiment, cable modem 218 provides access to a database, which may be on-line; the database contains the television schedule information, and the information is transmitted to the television. Software 216 stored in memory 214 is used to search for and provide the information, along with providing several other features described below. The available data, displayed on the television, may be stored in memory 214 within cable system 210, or within a database 248 within television 222. A controller 252 is used to obtain the data from memory 214 or from database 248 to display it on television 222. From the television schedule guide, the user can further utilize user interface 240 to press a "Services" button. This Services button can be located on the user interface or within the television schedule guide display. When the Services button is pressed, the user is given choices such as News, Weather, Sports, Scores, Financial Data, Local Traffic, Network, etc. Using the user interface, the user can then select the area or title of interest, and the associated information from the database is provided.

The user can further access the internet by choosing Network from the guide using the user interface. Cable modem 218 accesses the internet, and once connection is made, the user has two-way communication with on-line service providers. The user can then access the different on-line services. For example, a user viewing a sporting event may press the Services button, and a different menu will appear with the following choices: (1) Sports Scores, (2) Current Game Statistics, (3) Current Player Statistics, and (4) Associated Products. If the user selects (4) Associated Products, the software, will notify the cable modem and instruct the cable modem to establish connection with an on-line service provider. The on-line service provider then lists a series of selections associated with the game (e.g., 49er's hats, Giant's Baseball Bats from Louisville Slugger, Nike Spiked Football shoes for Pop Warner, etc.), and the user can interact with the service provider accordingly.

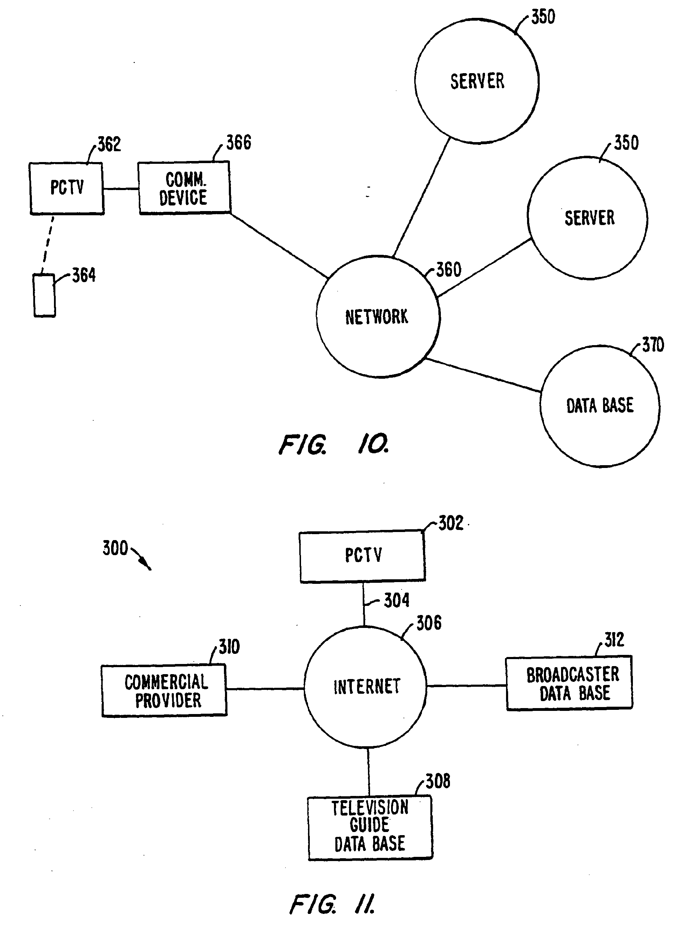

Figure 10 illustrates a system and method for accessing television schedule information from one or more servers 350 on a computer network 360, such as the Internet or the World Wide Web. The television information guide may be accessed and viewed through a computer system, a television system, a PCTV, or a simple display coupled to a communication link, such as a telephone line or the like. In the representative embodiment, a PCTV 362 is illustrated with a user input device 364, such as a remote control, keyboard, mouse or the like, and a communication device 366 for accessing computer network 360. As discussed above, communication device 366 may include a wide variety of data lines, such as telephone lines, cable modems, etc.

In one embodiment, the computer network 360 includes a plurality of servers 350 and a database 370. The database 370 includes television schedule information, which may be retrieved and viewed on PCTV 362. Servers 350 represent file servers having files, databases or the like. In a representative embodiment, the computer network is the World Wide Web and each server 350 is set up as a network file server addressable by a unique address. For example, the servers 350 may be configured to follow a common network protocol such as the Transmission Control Protocol (TCP), and the Internet Protocol (IP) (commonly referred to collectively as TCP/IP), and may be assigned a unique IP address or internet domain name. For example, the servers may be assigned the domain name "invoice.com". The servers 350 may also have some form of server software installed to permit the system to function as an internet graphics server. For example, the servers 350 may be configured with HyperText Transport Protocol (HTTP) server software to permit the system to function as an internet "world wide web" (WWW) server. In this embodiment, PCTV 362 may access servers 350 via the WWW using WWW compatible software by indicating the system's uniform resource locator address: "HTTP://www.invoice.com".

In another embodiment, the television schedule guide (not shown) is stored as one or more files (e.g., a website) on one of the servers 350, which can be accessed by any viewer having access to the World Wide Web. The television schedule guide or website may be configured for viewing and interacting with television information directly on-line, or it may be configured for downloading the information into a computer hard drive or other suitable processor. The guide will provide listings information for all channels in the viewer's local cable line-up. Preferably, the guide will be capable of creating personalized TV listings with search and sort features (discussed below) that allow the viewer to call up favorite programming choices based on categories, such as channel, day, actor, movie genre or other desired categories. The guide may also include other information about programs, such as ratings, stars, type of movie (e.g., suspense, comedy, drama, western, musical, children, biography, horror, etc.). This information may be provided on the actual website, or the website may provide means for linking the viewer with other websites to provide more information on certain topics and categories.

Since the television guide web site may be accessed from virtually any location in the world, it will preferably include a mechanism for selecting a region from which the television guide is applicable. For example, the television guide may include television schedule information from a variety of countries throughout the world, or the information guide may be limited to the United States. To obtain television schedule information for a particular region, the user can select an appropriate state, city, or other region, such as a region covered by a particular cable company. Alternatively, the television schedule guide may provide information for certain networks and stations (instead of particular channels or stations), such as CBS, FOX, HBO and the like, that are global to all regions of the country. With this configuration, the television guide may include a time zone selection so that the guide can automatically be configured for the particular time zone in which the user will watch television.

In one embodiment of the present invention, the system will include a search engine that allows the viewer to search for particular types of programs that will be broadcast within a certain period of time. The search engine may include categories such as title, description, category, dates, day parts, channels, actor/actresses, directors, etc. In addition, the viewer may obtain more information on the programs within each category. For example, the guide could provide information on movies in many categories, including theatrical, made-for-TV movies, Spanish, French, etc. The guide can tell you what Clint Eastwood movies are on this week, how many StarTrek episodes this weekend, or whether your favorite basketball team is on TV this Saturday. The on-line viewer may customize their own listings by title, year, actors, director, run themes, critical star rating, MPAA, warning lines, video laser disc, full descriptions, genre, and holidays with themes. In another example, the guide could provide information on shows and series, including network shows, first run, British, PBS, cult favorites, syndicated shows, talk shows, local productions and obscure programs. The user may sort by, for example, title, episode run times, genre, original air date, etc.

In another aspect of the invention, the web site television guide will include a highlight section that highlights particular programs that will be broadcast during the day, week or month. For example, the guide may have a web page that picks a "hot pick" for each day of the week, and provides a picture or video together with descriptive information, such as an editorial comment, on the video hot pick. In addition, the user may be able to move to other areas where more information can be provided on particular moves, such as articles, interviews with actors/actresses, editor's choice reviews, commentaries, etc.

In another aspect of the invention, the system will include a variety of files on the same or different network servers that allow the user to interact with other users, program sponsors, advertisers, etc. For example, the system may have a web site that allows viewers to chat about certain programs (each program itself may have its own website). In addition, the system may include a "virtual agent" that searches existing web sites on the internet and points to web sites that may interest the viewer. The virtual agent will learn from previous user choices to customize the television guide for each particular viewer.

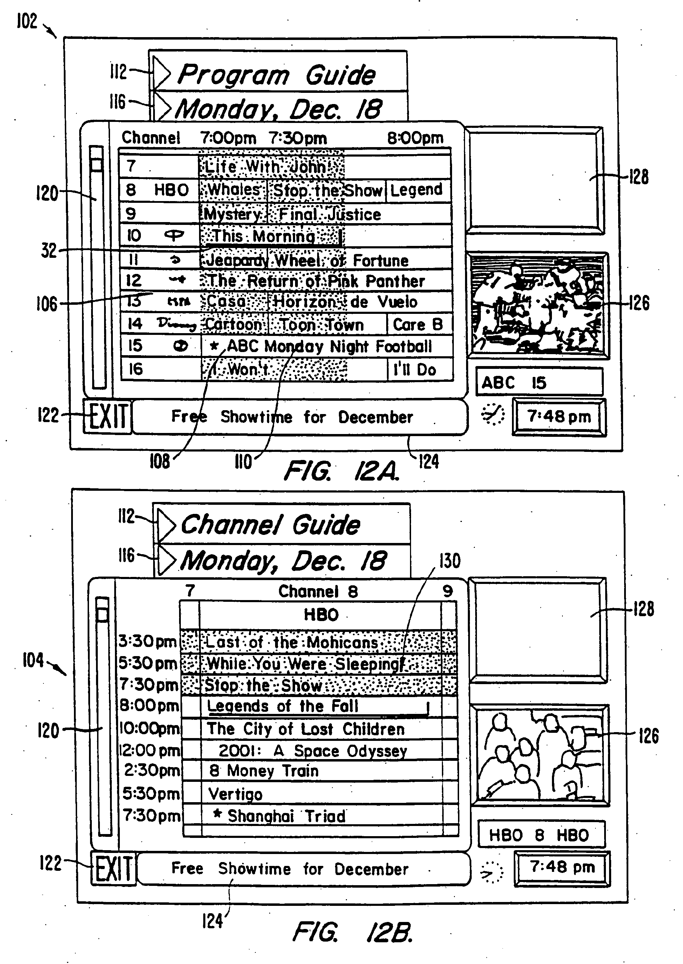

Figure 11 schematically illustrates a system and method according to the present invention for linking television viewers with broadcasters and advertisers during the broadcast of a commercial or program. As shown, system 300 includes a viewer interface 302, such as a television, computer, PCTV or a television coupled to a computer system. For convenience, the system will be described as utilizing a PCTV 302. A data line 304, such as a cable modem, telephone line or other communication link, couples the PCTV 302 with a remote database, network server or on-line-service, such as the Internet 306. A television guide database 308 is also coupled to the Internet 306 for providing the television schedule information to PCTV 302. This information may be downloaded to PCTV 302, or it may be configured for viewing only while the viewer is actually connected to database 308. Alternatively, the television guide may be drawn locally from a processor within PCTV. As shown, a commercial provider 310 (e.g., Budweiser) and/or a television station broadcaster 312 (e.g., ABC) also have databases directly coupled to PCTV 302 or through Internet 306.

PCTV 302 may include a memory and a processor with appropriate software (not shown) for searching and retrieving information from databases on the Internet 306 based on user selections. Alternatively, this function may be provided through Internet 306, television guide database 308 or through the commercial provider 310 or broadcaster 312. In this embodiment, PCTV may access an application or applet (e.g., aJavam applet) having the appropriate software to run the television schedule guide on a display, e.g., a computer monitor, television display or other user interface.

In one example, the viewer is watching a sports event, such as a football game. One or more icons or other visual indicators are located on the television screen in a convenient location, such as the top, right corner. One of these icons may be an icon that represents the television schedule guide. The viewer can move a cursor or other visual indicator to the television guide icon and click thereon to open up the television guide as discussed in detail below. Another icon may be provided, for example, by a commercial sponsor. Moving into and activating this icon allows the viewer to link with a database provided by the commercial sponsor, or to a portion of the television schedule guide database that allows the viewer to purchase an advertised product, make a monetary contribution, respond to a survey, answer a question, or participating in contests with other viewers, for example.

By way of example, Budweiser may provide a database 310 that allows the viewer to purchase a coupon for a free six-pack or other items, such as Budweiser T-shirts, hats, etc. The viewer may purchase the coupon, hats, or T-shirts directly through the commercial sponsor, or through a delivery system provided by the television schedule guide (discussed in detail below). This type of advertising allows the advertiser to directly target a particular program, and it allows the viewer to directly purchase the products during the advertisement. In addition, viewers will not forget the advertisement or simply lose motivation to spend money or request information after the commercial or program is over.

In another example, the television network that is broadcasting the program may provide an icon that allows the viewer to access a database 312 providing more information about the football game, previews of upcoming programs related to the program, such as another football game later on in the week, or other products and services related to the football game. Figures 12-17 illustrate a sample television schedule system 200 with a grid guide, and methods for utilizing the television schedule system with the contextual linking system and method of the present invention. Of course, it should be recognized that the invention is not limited to the specific television schedule system shown in Figures 12-17. For example, other suitable television schedule systems are described in the user's manual "Using Starsight 2", which is attached to this application as an Appendix, or commonly assigned U.S. Patent Nos. 5,353,121, 5,479,266, the complete disclosures of which have previously been incorporated herein by reference. The television schedule system 200 shown in Figs. 12-17, however, is particularly advantageous with the contextual linking system of the present invention as it enables the viewer to quickly and efficiently browse through the television schedule, and to interact with a wide range of services that are related to the programs in the television schedule.

Figures 12A and 12B illustrate a program guide 102 and a channel guide 104, respectively, for the television schedule system of the present invention. The program guide 102, which is the primary mode in the television schedule system, includes a number of screen information areas or windows in a particular screen where the viewer operates a input device, such as a remote control, to move around vertically and horizontally and to interact with that screen area's function. Within each screen area are one or more items, typically arranged in a matrix or grid so that the viewer can scroll through the grid to select or activate items within the grid. Activation of an item will invoke a Submenu, a Dialog, a Panel, invoke an action or the like.

As shown in Fig. 12A, program guide 102 preferably includes a schedule information area 106 having a program matrix 108 of cells or items that depict the shows that are being presented on each channel at each time during the day. Program guide 102 conveniently lists the channels in a vertical column to the left of the program matrix 108 and the times in a horizontal row above matrix 108. As shown, the viewer may vertically scroll through a particular time or horizontally scroll through a channel with the remote control device. As the viewer scrolls through matrix 108, a cursor 110 will indicate the user's location within the matrix 108. Alternatively, the item may be automatically highlighted with a brighter color to indicate the viewer's location. Preferably, program matrix 108 will also be shaded to indicate the portion of each show that has already been presented. For example, as shown in Fig. 12A, the shading extends to 7:48 (the current time as indicated at the bottom right of program guide 102) to indicate which portion of the show the viewer has already missed.

As shown in Fig. 12A, program guide 102 includes a number of other information areas. For example, program guide 102 includes a mode menu area 112 that indicates the currently active mode (i.e., program guide 102) and allows the viewer to pull down a mode menu 114 (see Fig. 13A). Program guide 102 also includes a date area 116 that indicates the date reflected in program matrix 106 and allows the viewer to pull down a date submenu 118 to change the date. In other submodes, the submode menu will display options for ordering or displaying lists that are appropriately related to the submode. A proportional scroll bar 120 located to the left of program matrix 106 is visually proportional to the total information in program matrix 106 to provide visual feedback as the user vertically scrolls through matrix 106.In addition, scroll bar 120 may be used for large-scale movement through hundreds of channels/sources by navigating to bar 120 and then vertically moving bar 120. An exit area 122 allows the viewer to immediately exit back to the television by navigating to exit area 122 and clicking on the remote control device. A program area 126 depicts the currently tuned program and a preview window area 128 can be used for all types of promotional, descriptional, or contextual video or graphics, such as a short preview of the show that is currently being highlighted in show matrix 106. Preview window area 128 may also be interactional similar to the other areas of guide 102.

The program guide may also include a variety of additional areas to facilitate use of the television schedule system, present information to the viewer or advertise programs or other products. For example, a scrolling commercial message 124 may be located underneath program matrix 106 that advertises programs or products from program sponsors, etc. The viewer may navigate to message 124 to receive more information or to purchase the product or program.

This function of ordering items is not limited to videos. For example, the program may access other contextual linked services such as a commercial store, etc., to allow the purchaser to buy a wide variety of different services or goods directly or indirectly linked to a particular program. For example, an Info Menu for Monday Night Football may allow the viewer to scroll through submenus that allow the viewer to purchase Washington Redskins' caps, Minnesota Vikings' caps or any NFL cap. The viewer has a choice to follow a program's link back to the commercial area where a larger selection of items and services are available. A product like the cap above may lead the viewer directly to an NFL proshop, whereas a link to a movie on demand may lead back to a commercial film library.

Figure 12B illustrates the television schedule system of the present invention in the channel guide mode. As shown, channel guide 104 is similar to program guide 102 except that it includes an information screen area 130 that is reversed from the information screen area 106 in the program guide. Thus, the viewer can scroll vertically to move forward and backward in time along one channel and horizontally to move from channel to channel.

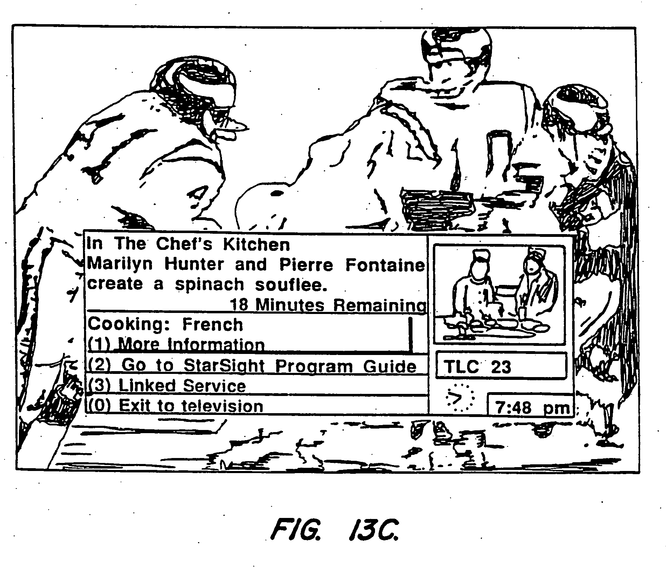

Figures 13A-13C illustrate a method of accessing program guide 102 from a currently tuned program and browsing through other currently tuned programs with remote control device 2. As shown in Figure 13A, the viewer is watching a television show on a display screen 132, such as a Monday Night Football game featuring the Washington Redskins versus the Minnesota Vikings. Clicking on the remote control device automatically causes a Program InfoMenu 130 to pop up on a portion of the television screen 132 (see Fig. 13B). Program InfoMenu 130 may allow the viewer to obtain more information about the currently tuned program, move to program guide 102, move to contextual linked services (discussed below), or exit InfoMenu 130 back to the television show. The viewer may vertically scroll through these options upwards or downwards, and select one of the options. For example, clicking on the "Go to program guide" section immediately transfers the viewer to the program guide, as shown in Figure 12A. To browse other currently tuned programs, the viewer employs suitable channel controls or other input commands on the remote control device (not shown). As shown in Fig. 13C, the viewer may browse through other information menus while viewing the currently tuned program.

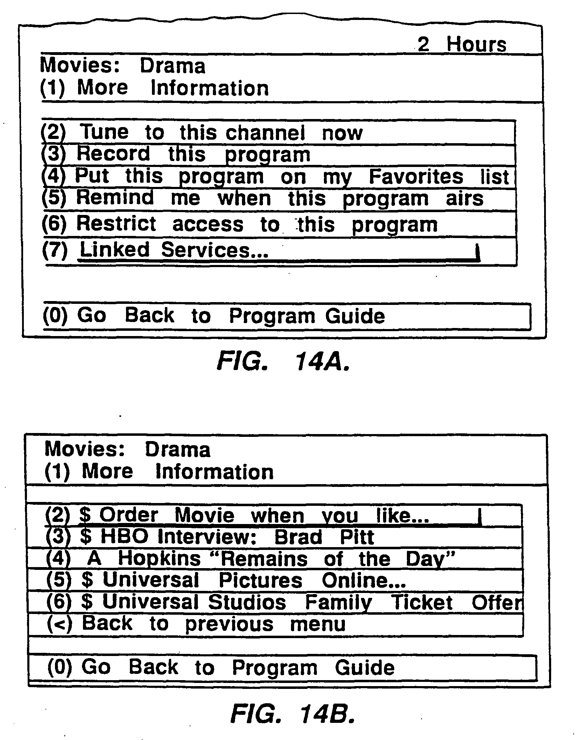

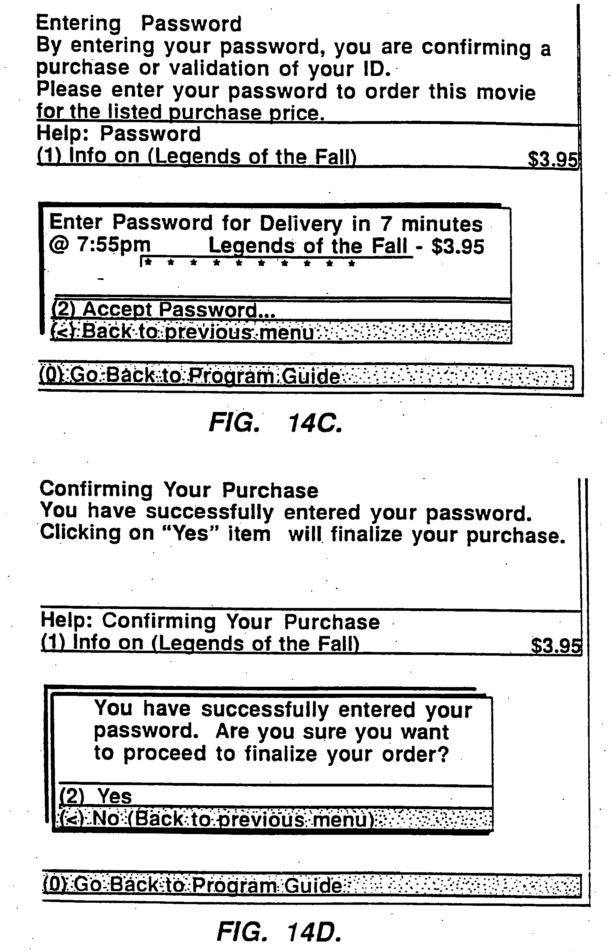

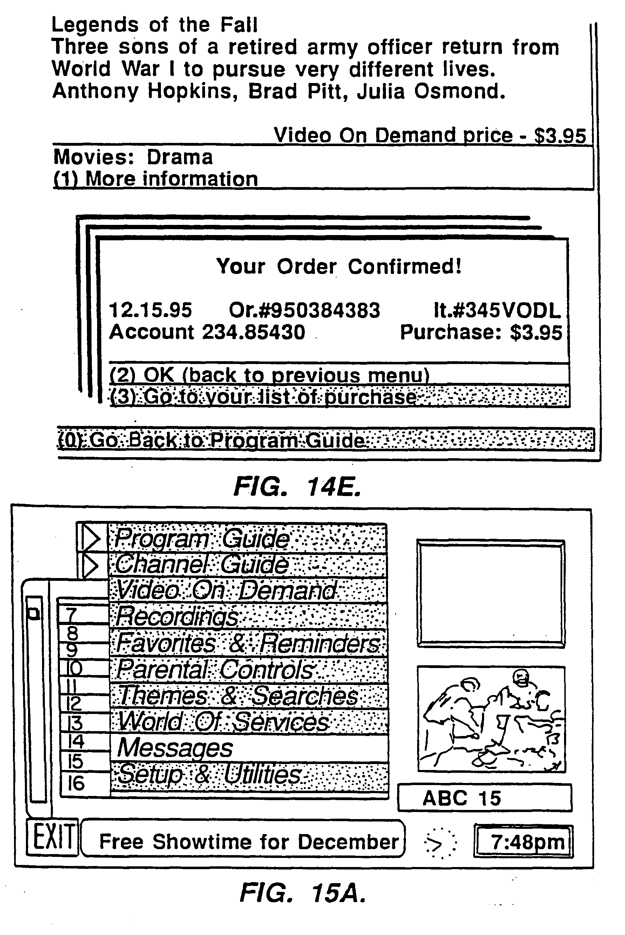

Figures 14A-14E illustrate a method of ordering video on demand with the system of the present invention. As shown in 14A, the viewer opens up the program's InfoMenu 130 and scrolls down to the "linked services" item. The viewer is then presented with an easily scrollable menu 162 of items and services associated with this program, as shown in Figure 14B. Some, denoted with a dollar sign, are purchasable. Free items would be instantly accessible to the viewer. Here, the viewer may be prompted to a simple procedure to specify when the movie is to be delivered. When the viewer selects a particular service or item requiring a financial transaction, a purchasing sequence unfolds. As shown in Figure 14C, the viewer is prompted to enter the master password/access code via the remote keypad or other means. For example, the viewer could swipe his or her credit card through a slot on the remote control device. If the password/access code is accepted, the viewer is given a final opportunity to review the purchase and/or either confirm or return to the previous item menu (see Figure 14D). When the viewer confirms his or her purchase and/or order, a receipt 170 is shown (Fig. 14E).The viewer is given the choice of returning to the previous item menu or, as always, at the very bottom item "0", to return to the program guide.

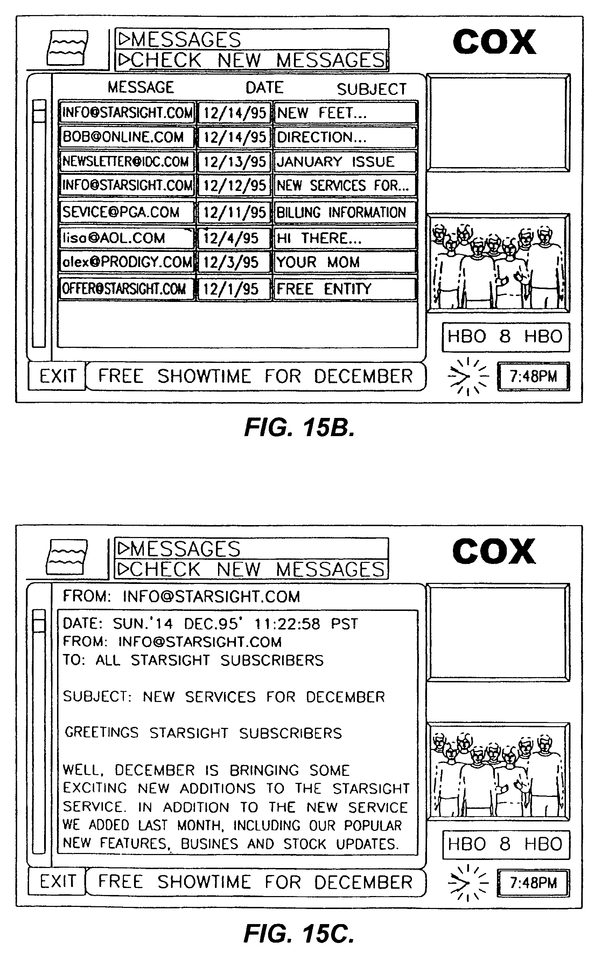

Figs.l5A-15C illustrate another embodiment of the present invention in which the television viewer may accept incoming e-mail messages or send outgoing messages to other television viewers or users connected to the television schedule system, e.g., users on the Internet. As shown in Fig. 15A, the viewer scrolls down to the Messages window in the Mode menu and activates this window to enter a submode menu. To read incoming messages, the viewer scrolls down to the "Check new messages" cell and activates this cell to display messages that have been received. The Messages mode organizes incoming messages in order of date received and displays them in lists (see Fig.15B). The viewer may then scroll to a particular message, as shown in Fig.15C. To send outgoing messages, the viewer scrolls down to the "Create message" cell and activates this cell to open up a blank window. A message may be created by inputting text on the input device, through voice activation via a microphone on the input device.

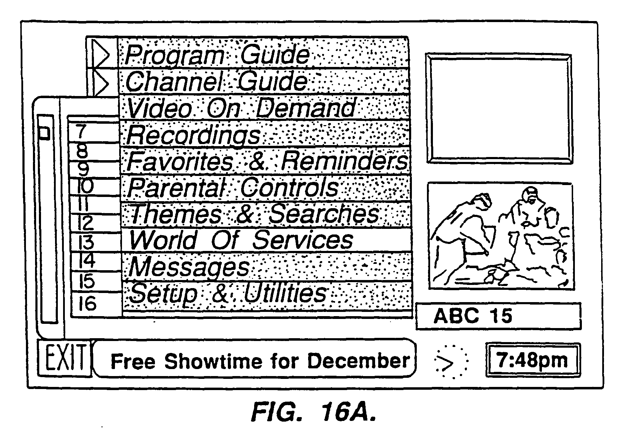

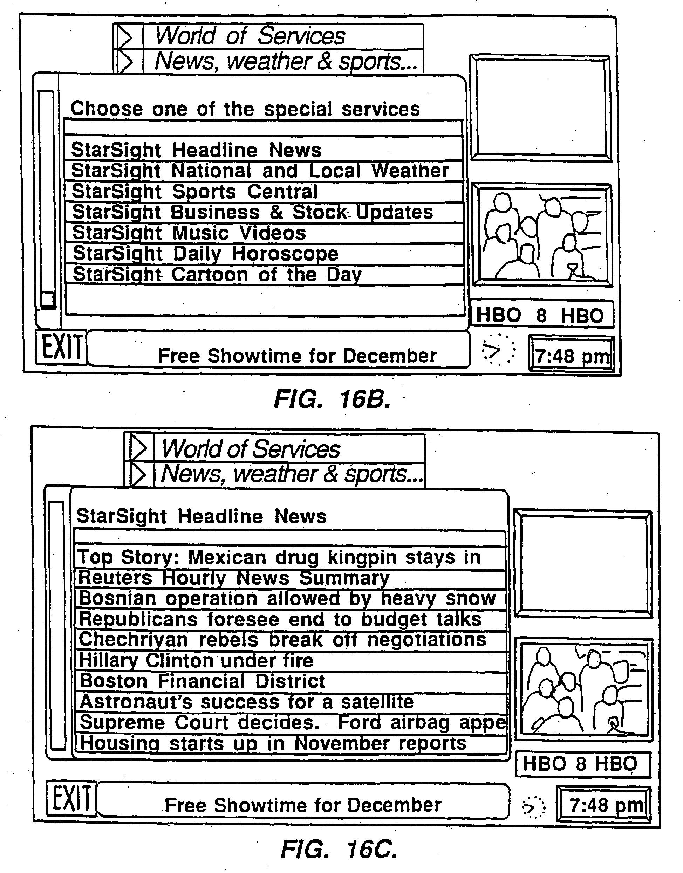

Figs. 16A-16C illustrate a method of accessing a whole variety of other services to the Internet with the interactive television schedule system of the present invention. As discussed above, databases on the Internet may be accessed through a telephone line, cable modem or other means of communication. As shown in Figure 16A, the user scrolls down to the world of services mode and clicks on this mode to obtain a submode that includes a variety of different services, such as news, weather and sports, previews and reviews of programs on the television schedule guide, a super mall for purchasing products and services related to the programs in the television schedule guide, or other products and services on the Internet or World Wide Web. As shown in Figure 16C, the user has selected news, weather and sports, which opens up another menu involving a variety of special services, such as headline news, national and local weather, sports central, business and stock updates, music videos, daily horoscope, cartoon of the day and/or other services related to news, weather and sports. These services may be provided by a special database that is linked to the television system, to an on-line information provider, such as America On Line, Prodigy and the like, or with a search engine that searches network servers or databases on the Internet and World Wide Web. As shown, the user selects headline news which opens up another menu providing the user with a variety of news reports that may be accessed.The news reports may be viewed, printed out, or downloaded to the computer system that is attached to or an intricate part of the television system, (e.g., PCTV).

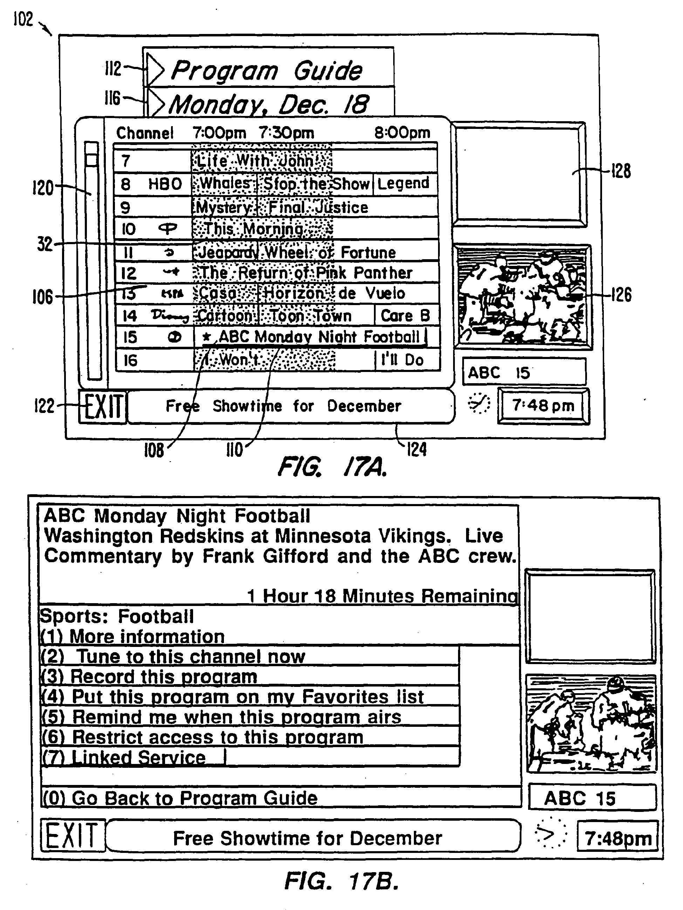

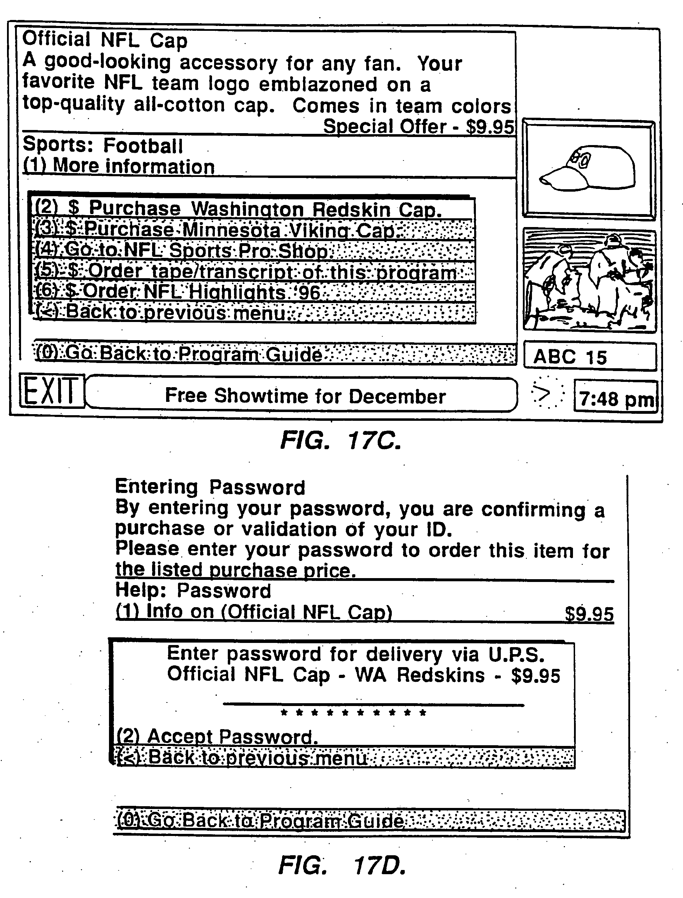

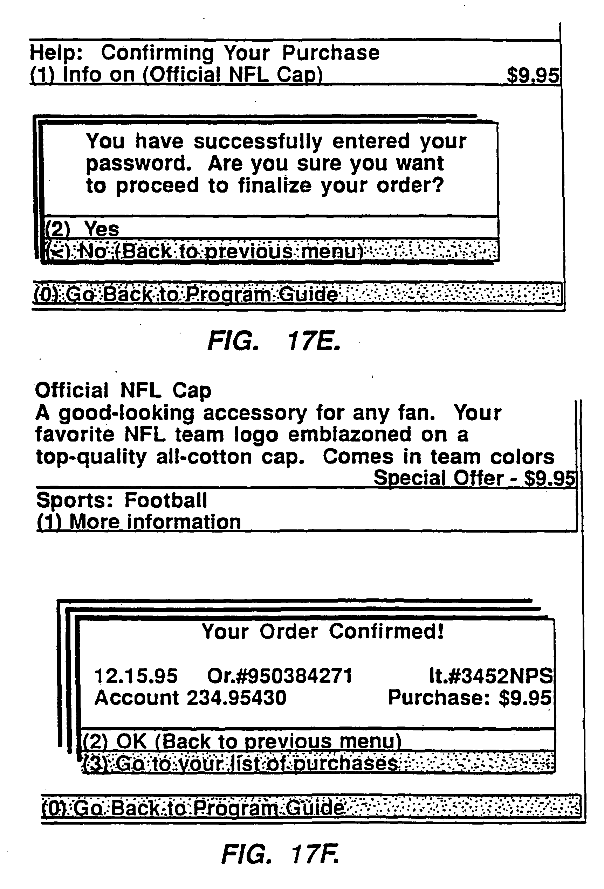

Figures 17A-17F illustrate a representative system and method for contextually linking related items and services to a particular program in the program guide 102. As shown in Figure 17A, the viewer selects a particular program within guide 102, to access that program's info menu. Within the info menu, the viewer then scrolls to linked services and clicks on this window to move into a database that includes items and services contextually related to that particular program. In the example shown, the viewer has been watching a sport event featuring the Washington Redskins v. the Minnesota Vikings. The viewer is transferred to a window that provides a number of options for purchasing items and services related to that game, such as Washington Redskin or Minnesota Vikings paraphernalia, other NFL teams paraphernalia (in an NFL sports pro shop), or highlights of other games between these two or other teams. Alternatively, the viewer may order a tape/transcript of the program that is currently being shown on the guide. Figures 17C-17F illustrate a case in which the viewer has selected purchasing a Washington Redskin cap. The viewer inputs a password or other input identification, which is confirmed by the system. Alternatively, the viewer can simply swipe his or her credit card or other identification card through the remote control device or the television system to authorize the purchase of the Redskins' cap. The order is confirmed and the cap is delivered to the viewer's home.

Although the foregoing invention has been described in detail for purposes of clarity, it will be obvious that certain modifications may be practiced within the scope of the appended claims. For example, the viewer can automatically tune to a desired program or can select different programs for automatic recording. For more information on automatic tuning and automatic recording, see U.S. Patent No. B1 4,706,121 and U.S. Patent Application No. 08/423,411.

## Claims

1. A method for recording television programs , the method comprising:
receiving, storing and managing television schedule information;
displaying, on a display, television schedule information for a plurality of television programs;
receiving, from a user, a selection of a television program for recording from the displayed television schedule information;
controlling a selected one of two recording devices to record automatically the selected television program; and
recording the selected television program on the selected recording device.

2. The method of claim 1, further comprising recording a second television program at the same time as the selected television program on a recording device other than the selected recording device.

3. The method of claim 2, further comprising selecting the recording device other than the selected recording device.

4. The method of claim 1, further comprising turning on the selected recording device at the start time of the selected television program.

5. The method of claim 1, further comprising turning off the selected recording device at the end time of the selected television program.

6. The method of claim 1, wherein the plurality of recording devices is selected from the group consisting of:
a videocassette recorder;
a digital storage device; and
a videocassette recorder and a digital storage device.

7. The method of claim 1, wherein the selected recording device is one of a videocassette recorder and a digital storage device.

8. The method of claim 1, wherein the selected television program is selected by a user using the interactive television program guide.

9. The method of claim 1, wherein the selected recording device is selected by a user.

10. A system for recording television programs comprising:
an interactive television program guide for receiving, storing and managing television schedule information for a plurality of television programs;
a display for displaying television schedule information for a portion of the plurality of television programs;
a user input device, operable to communicate with the interactive television program guide, to allow a user to select for recording a television program from the displayed television schedule information; and
a controller for controlling a selected one of two recording devices to record automatically the selected television program;

11. The system of claim 10, wherein the controller is operable to control a recording device other than the selected recording device to record a second television program at the same time as the selected television program.

12. The system of claim 11, wherein the controller is operable to select the recording device other than the selected recording device.

13. The system of claim 10, wherein the controller is operable to turn on the selected recording device at the start time of the selected television program.

14. The system of claim 10, wherein the controller is operable to turn off the selected recording device at the end time of the selected television program.

15. The system of claim 10, wherein the plurality of recording devices is selected from the group consisting of:
a videocassette recorder;
a digital storage device; and
a videocassette recorder and a digital storage device.

16. The system of claim 10, wherein the selected recording device is one of a videocassette recorder and a digital storage device.

17. The system of claim 10, wherein the system is operable such that the selected television program is selectable by a user using the interactive television program guide.

18. The system of claim 10, wherein the system is operable such that the selected recording device is selectable by a user.
